# EUROPEAN PATENT APPLICATION

(11) **EP 1 722 069 A1**
(43) Date of publication of application: **15.11.2006**
(21) Application number: 05010540.2
(22) Date of filing: 13.05.2005
(51) Int. Cl.: F01D 9/02, F02C 3/14, F23R 3/42, F23M 13/00

(54) **Combustion turbine engine**

(71) Applicant: SIEMENS AKTIENGESELLSCHAFT, 80333 München (DE)
(72) Inventor: Bethke, Sven, Dr., 40486 Düsseldorf (DE); Krebs, Werner, Dr., 45481 Mülheim an der Ruhr (DE); Sattinger, Stanley S., McDonald, PA 15057 (US)

(57) **Abstract**

A combustion turbine engine includes a turbine section and a combustor section,
the combustor section comprising a combustor for producing a hot pressurized gas and a combustor transition being arranged between the combustor and the turbine section for leading the hot pressurized gas to the turbine section,
the turbine section comprising a rotatable turbine having an axial direction and a radial direction, wherein rotation may be imparted to the turbine by the hot pressurized gas being lead to the turbine section,
wherein the combustor transition comprises a hot pressurized gas outlet and wherein at least the hot pressurized gas outlet of the combustor transition is inclined with respect to the radial direction of the turbine such that hot pressurized gas leaving the hot pressurized gas outlet towards the turbine section receives a velocity component in the rotation direction of the turbine.

## Description

### BACKGROUND OF THE INVENTION

The present invention relates to combustion turbine engines as may be employed in a variety of uses, such as industrial processes, electric power generation, or air craft engines. More particularly the present invention is directed to a combustor transition which is designed for being arranged in such a combustion turbine engine between a combustor and a turbine section.

Typical combustion turbine engines as e.g. described in US 4,787,208 comprises three main sections: a compressor section, a combustor section, and a turbine section. Air drawn into the compressor section is compressed thereby increasing the temperature and the pressure. The compressed air then flows from the compressor section through the combustor section, where the temperature of the air mass is further increased. From the combustor section, the hot pressurized gas flows into the turbine section where it expands, and the energy of the expanding gas is transformed into a rotational motion of the turbine rotor. A typical combustor section comprises a number of combustors arranged in an annular array about the circumference of the combustion turbine. The hot pressurized gas which is produced in the combustors is led towards the turbine section by combustor transitions arranged between the combustors and the turbine section.

The turbine rotor comprises a shaft and a number of turbine blades fixed to the shaft which extend from the shaft substantially in radial direction and which are disposed in rows along the circumference of shaft.

Between the first turbine blade of the turbine section and a hot pressurized gas outlet of the combustor transition a number of turbine vanes are arranged which are fixed to a casing surrounding the turbine rotor.

Hot gas acoustic waves which are present in the hot pressurized gas flowing from the combustor transitions towards the turbine section will be reflected by such vanes which represent a highly reflecting acoustic boundary condition. Optimizing acoustic properties is therefore difficult to achieve.

Therefore, it is desired to provide an improved combustion turbine engine in which acoustic properties can be more easily optimized.

Further it is desired to provide a combustor transition which allows for improving a combustion turbine engine such that acoustic properties in the combustion turbine engine can be more easily optimized.

### SUMMARY OF THE INVENTION

In a first aspect of the present invention, a combustion turbine engine is provided which includes a turbine section and a combustor section. The combustor section comprises a combustor for producing hot pressurized gas and a combustor transition being arranged between the combustor and the turbine section for leading the hot pressurized gas towards the turbine section. The turbine section comprises a turbine rotor having a radial direction and a tangential direction, wherein rotation maybe imparted to the rotor by the hot pressurized gas being led to the turbine section. In the combustor section, the combustor transition comprises a hot pressurized gas outlet. Further, at least the hot pressurized gas outlet of the combustor transition is inclined such with respect to the radial direction of the rotor towards the tangential direction of the rotor that hot pressurized gas leaving the hot pressurized gas outlet towards the turbine section receives a velocity component in the rotation direction of the rotor. It is also possible that the whole combustor transition inclined.

By the described design of a combustion turbine engine, the turbine vanes between the combustor transition and the first turbine blades of the rotor can be omitted.

In the state of the art combustion turbine engines turbine vanes are needed for guiding the hot pressurized gas towards the turbine blades when it enters the turbine section, i.e. the hot pressurized gas flowing into the turbine section is provided with a velocity component in the rotation direction of the rotor by the vanes.

Due to the inclination it is not necessary in the present invention to arrange such vanes between the first turbine blades and the hot pressurized gas outlet of the combustor transition. Therefore, a reflection of acoustic waves only takes place at the moving turbine blades. As a result, the acoustic waves will be reflected at frequencies which are different to the frequencies before the reflection due to the Doppler Effect. There is no wave reflected at the same frequency. Hence, the acoustic properties of the system will be changed with respect to combustion systems which comprise inlet guiding vanes.

As in the inventive combustion turbine engine the acoustic properties depend on the inclination angle, such properties can be optimized by setting an optimal inclination angle. Such an optimized inclination angle can be found empirically for each design of combustion turbine engines.

Further, when a resonant volume is arranged at the hot pressurized gas outlet acoustic properties of the system can be tuned. In particular, the resonant volume can be chosen such as to suppress and dissipate the acoustic waves Doppler shifted by the rotating blades of the rotor. As a consequence, the acoustic damping of the combustion system can be increased.

According to another aspect of the present invention, a combustor transition is provided which is designed for being arranged in a combustion turbine engine between a combustor and a turbine section which comprises a rotatable rotor having a radial direction and a tangential direction. The combustor transition is to be arranged such as to guide a hot pressurized gas produced by the combustor to the turbine section and comprises a hot pressurized gas outlet section which is to be arranged towards a turbine section. Further, the combustor transition is designed such that, when implemented into a combustion turbine engine, at least the hot pressurized gas outlet section has an inclination with respect to the radial direction of the rotor towards the tangential direction of the rotor such that hot pressurized gas leaving the hot pressurized gas outlet section towards the turbine section receives a velocity component in the rotation direction of the rotor.

In such a combustor transition, a resonant volume may be arranged in the hot pressurized gas outlet section for suppressing and dissipating acoustic waves.

### BRIEF DESCRIPTIONS OF THE DRAWINGS

Fig. 1 shows a longitudinal section of a land-based combustion turbine engine arranged for the production of electric power.
Fig. 2 is a schematic diagram showing the arrangement of the combustor transition and a first turbine stage in a state of the art combustion turbine engine.
Fig. 3 is a schematic view of an inclined combustor transition and the first turbine stage.
Fig. 4 shows a longitudinal section of a combustor transition.

### DETAILED DESRIPTION OF THE PREFERRED EMBODIMENTS

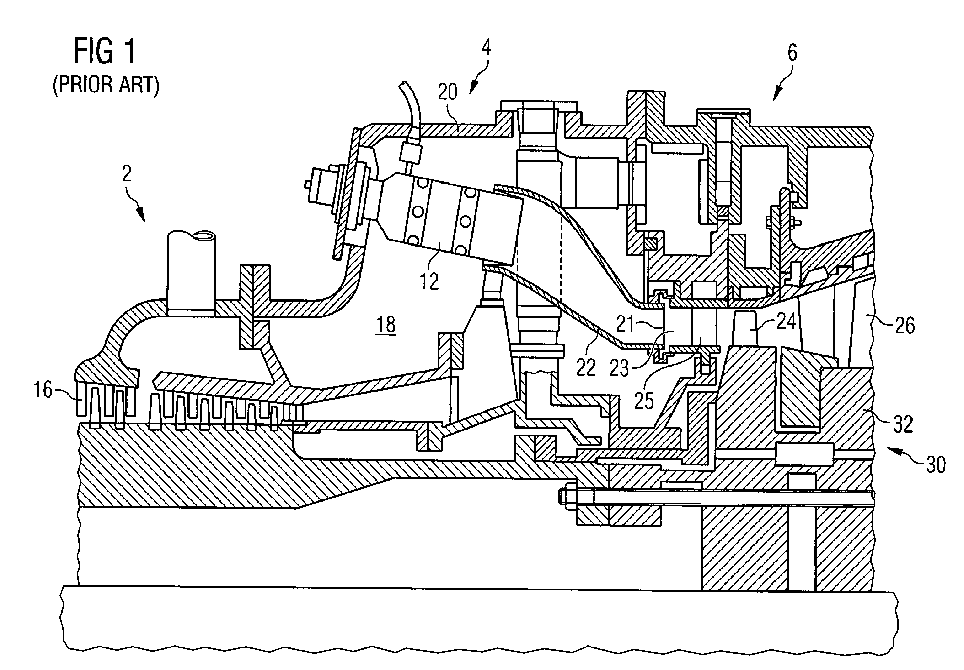

Fig. 1 shows a sectional side view of a state of the art combustion turbine engine. The engine comprises a compressor section 2, a combustor section 4 and a turbine section 6. In the combustion section 4, a plurality of generally cylindrical combustors 12 are arranged. Fuel is supplied to the combustors 12 through a nozzle structure 14 and air is supplied to the combustors 12 by the compressor 16 through airflow space 18 within a combustion casing 20. In the combustor, the air fuel mixture is burnt so that a hot pressurized gas is produced.

The hot pressurized gas produced in a combustor 12 is let towards to the turbine section 6 by a combustor transition 22 which is arranged between the combustor 12 and an inlet 23 of the turbine section 6. A hot pressurized gas outlet 21 of the combustor transition 22 is arranged opposite to the inlet 23 of the turbine section 6 such that the hot pressurized gas flows along an axial direction with respect to a rotor 30 which is built by a shaft 32 extending longitudinally through the combustion turbine engine and a plurality of turbine blades 24, 26 which are fixed to the circumference of the shaft.

Between the first turbine blades 24 and the outlet 21 of the combustor transition 22 a number of guiding vanes 25 is present in order to change the direction of the flowing gas towards the rotation direction of the rotor. When hot pressurized gas flows from the outlet 21 of the combustor transition 22 into the turbine section, a rotation is imparted to the rotor 30 by the flowing gas.

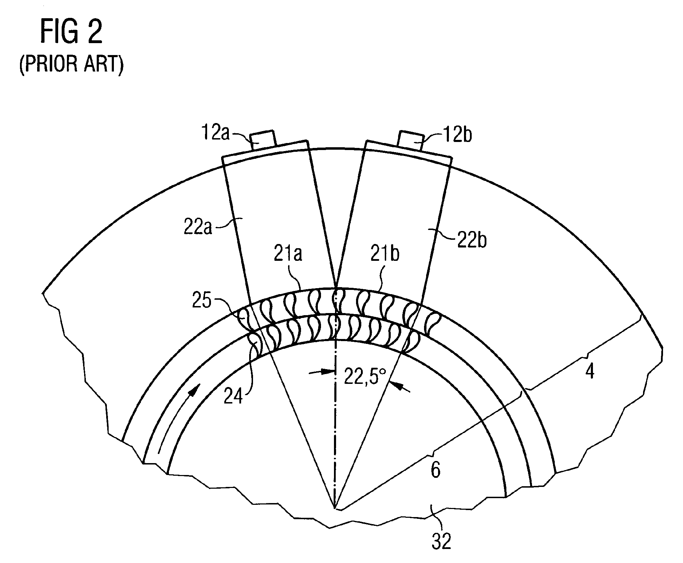

Fig. 2 shows a schematic view showing how the combustor transitions are arranged along the circumference of the turbine section 6 in a state of the art combustion turbine engine. The figure shows exemplary two combustor transitions 22a, 22b of a number of combustor transitions which are arranged around the circumference of the shaft 30. In the present example, sixteen combustors 12 and combustor transitions 22 are present. Therefore, each combustor transition 22 is inclined by an angle of 22.5° with respect to the neighbouring combustor transitions. However, the combustor transitions 22 are arranged such that the hot pressurized gas leaving the outlet 21 has no velocity component in the circumferential or tangential direction of the rotor 30. In other words, no inclination towards a tangential direction of the rotor 30 is present. A velocity component in the circumferential direction is provided by the guiding vanes 25.

The fixed guiding vanes 25 provide a highly reflecting acoustic boundary condition so that acoustic waves present in the flowing hot pressurized gas are reflected back into the combustor transition where they produce unwanted noise and unwanted vibrations.

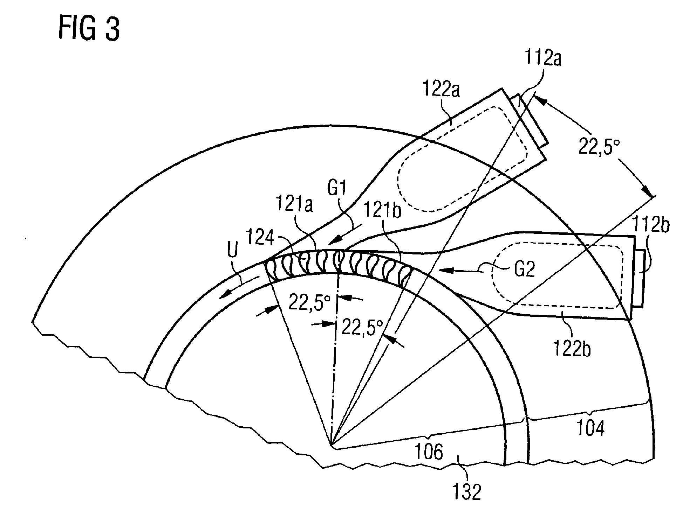

An example of the inventive arrangement of the combustor transitions 122 with respect to the turbine section 106 of a combustion turbine engine is shown in fig. 3. As can be seen, the combustor transitions 122a, 122b show an inclination with respect to the radial direction of the rotor 30 towards the tangential direction of the rotor 30. As a consequence, the hot pressurized gas G1, G2 has already a velocity component in the tangential or circumferential direction U of the rotor 30 when it leaves an outlet 121 of the combustor transition 122. As a further consequence, the guiding vanes present in the state of the art turbine section can be omitted.

In the inventive arrangement, acoustic waves propagating through the hot pressurized gas do not meet fixed highly reflective boundary conditions as in the state of the art. Instead acoustic waves propagating towards the rotating turbine blades will be reflected at a different frequency due to the Doppler Effect. No wave is reflected towards its origin at the same frequency. Therefore, the formation of standing waves within the volume of the combustor transition 122 is effectively reduced.

When a number of sixteen combustors 112 and combustor transitions 122 are present, they are arranged around the circumference of the shaft 32 with an angular distance between each other of 22.5°.

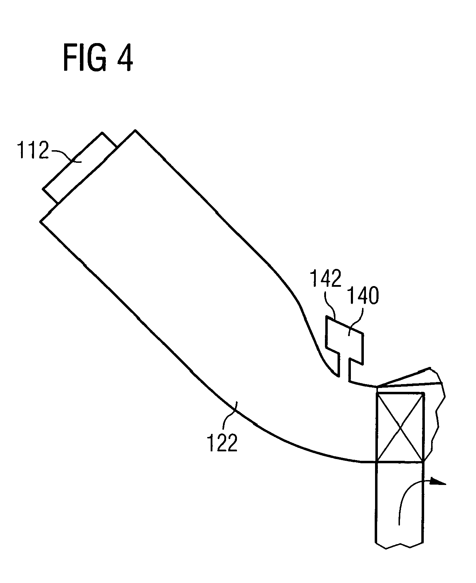

Fig. 4 shows a combustor transition 122 of the inventive combustion turbine engine in a sectional side view. It can be seen that a resonance volume 140 is present near the outlet 121 of the combustor transition 122. The resonance volume 140 is part of a resonator 142 which is fixed to the outside of the combustor transition 122. The magnitude of the volume 140 is chosen such that the reflected and frequency shifted acoustic waves are damped and dissipated.

With the inventive combustion turbine engine, acoustic damping of the combustion system can be increased.

## Claims

1. A combustion turbine engine including a turbine section and a combustor section,
the combustor section comprising a combustor for producing a hot pressurized gas and a combustor transition being arranged between the combustor and the turbine section for leading the hot pressurized gas towards the turbine section,
the turbine section comprising a rotatable rotor having a radial direction and a tangential direction, wherein rotation may be imparted to the rotor by the hot pressurized gas,
wherein the combustor transition comprises a hot pressurized gas outlet and wherein at least the hot pressurized gas outlet of the combustor transition is inclined with respect to the radial direction of the rotor towards the tangential direction of the rotor such that hot pressurized gas leaving the hot pressurized gas outlet towards the turbine section receives a velocity component in the rotation direction of the rotor.

2. The gas turbine engine as claimed in claim 1,
in which the rotor comprises a rotatable shaft and a number of turbine blades extending in the radial direction of the shaft, which are fixed to the circumference of the shaft for rotating together with the shaft when the hot pressurized gas is led to the turbine section and
in which no guiding vanes are arranged between the hot pressurized gas outlet and the turbine blades which are arranged closest to the hot pressurized gas outlet.

3. The combustion turbine engine as claimed in claim 2 in which the angle of inclination is chosen such as to optimize acoustic properties of the combustor section.

4. The combustion turbine engine as claimed in claim 2, in which a resonant volume is arranged at the hot pressurized gas outlet.

5. The combustion turbine engine as claimed in claim 4, in which the resonant volume is chosen such as suppress acoustic waves in the hot pressurized gas which are reflected by the rotating turbine blades.

6. The combustion turbine engine as claimed in claim 1, in which the whole combustor transition is inclined with respect to the radial direction of the turbine.

7. A combustor transition which is designed for being arranged in a combustion turbine engine between a combustor and a turbine section which comprises a rotatable rotor having a radial direction and a tangential direction, such as to guide a hot pressurized gas produced by the combustor towards the turbine section,
the combustor transition comprising a hot pressurized gas outlet section which is to be arranged towards the turbine section,
wherein the combustor transition is designed such that when implemented into a combustion turbine engine at least the hot pressurized gas outlet section has an inclination with respect to the radial direction of the rotor towards the tangential direction of the rotor such that hot pressurized gas leaving the hot pressurized gas outlet section towards the turbine section receives a velocity component in the rotation direction of the rotor.

8. The combustor transition as claimed in claim 7, in which a resonant volume is arranged at the hot pressurized gas outlet section.
